# EUROPÄISCHE PATENTSCHRIFT

(11) **EP 4 098 502 B1**
(45) Veröffentlichungstag und Bekanntmachung des Hinweises auf die Patenterteilung: **07.05.2025**
(21) Anmeldenummer: 22164892.6
(22) Anmeldetag: 29.03.2022
(51) Int. Cl.: B60W 30/14, B60W 30/18, B60W 50/038

(54) **VERFAHREN UND VORRICHTUNG ZUM WIEDEREINSCHEREN AUF EINE ZIELFAHRSPUR NACH EINEM ÜBERHOLVORGANG**
METHOD AND DEVICE FOR MOVING BACK INTO A TARGET LANE AFTER OVERTAKING
PROCÉDÉ ET DISPOSITIF DE RETOUR SUR UNE FILE CIBLE APRÈS UN CHANGEMENT DE FILE

(30) Priorität: 02.06.2021 DE 102021205600
(43) Veröffentlichungstag der Anmeldung: 07.12.2022
(73) Patentinhaber: Robert Bosch GmbH, 70442 Stuttgart (DE)
(72) Erfinder: Vetter, Daniel, 74354 Besigheim (DE)

(56) Entgegenhaltungen:
- WO-A1-99/30919
- DE-A1- 102017 205 506
- DE-A1- 102019 205 881
- DE-A1- 19 704 854
- DE-A1- 4 200 694

## Beschreibung

### Stand der Technik

Aus der DE 10 2019 208 484 A1 ist ein Verfahren zur fahrerunabhängigen Einstellung der Längsbeschleunigung eines einspurigen Kraftfahrzeugs bekannt, bei dem- mittels einer Umfeldsensorik das dem einspurigen Kraftfahrzeug vorausfahrende Vorderfahrzeug ermittelt und als Zielobjekt festgelegt wird, mittels derselben oder einer anderen Umfeldsensorik fahrdynamische Daten des Zielobjekts ermittelt werden, abhängig von den fahrdynamischen Daten die Längsbeschleunigung des einspurigen Kraftfahrzeugs eingestellt wird, ermittelt wird, ob das Zielobjekt mittels der Umfeldsensorik noch erfasst wird und für den Fall, dass das Zielobjekt nicht mehr erfasst wird, die Geschwindigkeit des einspurigen Kraftfahrzeugs auf einen vorgegebenen Wert eingestellt wird, wobei die Heranführung der Geschwindigkeit auf den vorgegebenen Wert derart erfolgt, dass ein vorgegebener Beschleunigungsgrenzwert nicht überschritten wird.

Ferner ist aus der DE 197 04 854 A1 ein Verfahren zum Wiedereinscheren auf eine Zielfahrspur nach einem Überholvorgang auf einer mehrspurigen Fahrbahn für ein mit einem automatischen Geschwindigkeits- und/oder Abstandsregelungssystem ausgestattetes Kraftfahrzeug bekannt, bei welchem eine Betätigung eines Fahrtrichtungsanzeigers ermittelt und abhängig davon in einen das Wiedereinscheren erleichternden Betriebszustand geschaltet wird.

Ein ähnliches Verfahren ist auch aus der WO 99/30919 A1 bekannt.

Darüber hinaus ist aus der DE 10 2019 205 881 A1 ein Geschwindigkeitsregelsystem für ein einspuriges Fahrzeug bekannt.

### Offenbarung der Erfindung

Die Erfindung betrifft ein Verfahren zum Einscheren bzw. Wiedereinscheren auf eine Zielfahrspur insbesondere nach einem Überholvorgang auf einer mehrspurigen Fahrbahn für ein mit einem automatischen Geschwindigkeits- und/oder Abstandsregelungssystem ausgestattetes einspuriges Kraftfahrzeug bei aktiviertem Geschwindigkeits- und/oder Abstandsregelungssystem, bei dem
- das Vorliegen einer momentanen Betätigung eines Bedienelements für einen Fahrtrichtungsanzeiger ermittelt wird und
- während der Betätigungsdauer des Bedienelements das Geschwindigkeits- und/oder Abstandsregelungssystem in einen das Wiedereinscheren bzw. Einscheren erleichternden Betriebszustand geschaltet wird.

Eine vorteilhafte Ausgestaltung der Erfindung ist dadurch gekennzeichnet, dass während dieses Betriebszustands die momentane Beschleunigung beibehalten wird.

Eine vorteilhafte Ausgestaltung der Erfindung ist dadurch gekennzeichnet, dass während dieses Betriebszustands mittels einer Umfeldsensorik die Beschleunigung des auf der Zielfahrspur fahrenden Vorderfahrzeugs ermittelt und übernommen wird.

Eine vorteilhafte Ausgestaltung der Erfindung ist dadurch gekennzeichnet, dass es sich bei dem Fahrtrichtungsanzeiger um denjenigen Fahrtrichtungsanzeiger handelt, welcher einen Wechsel von einer fahrbahninneren Spur in eine weiter fahrbahnaußen gelegene Spur signalisiert. In Ländern mit Rechtsverkehr handelt es sich dabei um den eine Fahrzeugbewegung nach rechts ankündigenden Fahrtrichtungsanzeiger, welcher auch bei einem Wiedereinscheren aktiviert wird. In Ländern mit Linksverkehr handelt es sich um den eine Linksbewegung ankündigenden Fahrtrichtungsanzeiger.

Erfindungsgemäß erfolgt die Durchführung des Verfahrens nur dann bzw. findet die Umschaltung in einen das Wiedereinscheren bzw. Einscheren erleichternden Betriebszustand nur dann statt, wenn beim Geschwindigkeits- und/oder Abstandsregelungssystem ein aktivier- und deaktivierbarer vorgegebener Betriebsmodus aktiviert ist.

Eine vorteilhafte Ausgestaltung der Erfindung ist dadurch gekennzeichnet, dass es sich bei dem Bedienelement um den Blinkerhebel handelt.

Eine vorteilhafte Ausgestaltung der Erfindung ist dadurch gekennzeichnet, dass es sich bei dem einspurigen Kraftfahrzeug um ein Motorrad handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

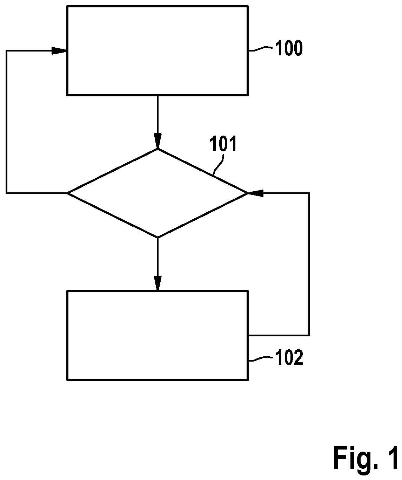

Die Zeichnung umfasst Fig. 1.

In Fig. 1 ist der grundlegende Ablauf des erfindungsgemäßen Verfahrens dargestellt.

Geschwindigkeits- und/oder Abstandsregelungssysteme werden zumeist auf mehrspurigen Straßen wie z.B. Autobahnen eingesetzt. Zweirad- oder Motorradfahrer sind auf solchen Straßen häufig in Gruppen unterwegs und wollen soweit möglich auch als Gruppe zusammenbleiben. Das Verhalten üblicher Geschwindigkeits- und/oder Abstandsregelungssysteme erschwert häufig dieses Zusammenbleiben.

Als Beispiel kann z.B. der Fall betrachtet werden, in welcher eine Gruppe von Motorradfahrern hintereinander einen auf dem rechten Fahrstreifen fahrenden LKW überholt, dazu nacheinander auf den linken Fahrstreifen wechselt und ebenso beabsichtigt, nach jeweiligem Überholen des LKW wieder hintereinander auf den rechten Fahrstreifen einzuscheren.

Dieser Wiedereinschervorgang kann bei einem aktiviertem Geschwindigkeits- und/oder Abstandsregelungssystem für das zweite Fahrzeug und die weiteren Fahrzeuge der Gruppe erschwert werden. Während des Überholvorgangs befindet sich das erste Fahrzeug vor dem zweiten Fahrzeug auf dem linken Überholstreifen und wird von dessen Geschwindigkeits- und/oder Abstandsregelungssystem als Zielobjekt ausgewählt, d.h. das Geschwindigkeits- und/oder Abstandsregelungssystem des zweiten Motorrads passt dessen Abstand, Geschwindigkeit und Beschleunigung dem Verhalten des vorausfahrenden Motorrads automatisch an.

Nachdem das erste Motorrad vor dem LKW wieder nach rechts eingeschert ist, hat das Geschwindigkeits- und/oder Abstandsregelungssystem des zweiten Motorrads sein Zielobjekt auf dem Überholstreifen verloren. Für das System scheint nunmehr der Überholstreifen, auf dem es sich noch befindet, als freie Fahrspur und abhängig von den Einstellungen des Geschwindigkeits- und/oder Abstandsregelungssystem kann dieses jetzt auch eine stärkere fahrerunabhängige Beschleunigung durchführen, da es den Wunsch des Fahrers nach einem baldigen Wechsel auf die rechte Fahrspur nicht kennt. Diese stärkere Beschleunigung und höhere Geschwindigkeit des Motorrads erschwert es dem Fahrer in die Lücke zwischen ersten Motorrad und dem überholten LKW einzuscheren und es ist dadurch möglicherweise sicherer, auf dem Überholstreifen zu bleiben und auch das erste Motorrad zu überholen. Dadurch wird die Fahrreihenfolge in der Gruppe abgeändert.

Sobald und solange des Fahrers des zweiten Motorrads den Blinkerhebel zur Signalisierung des beabsichtigten Einscherens betätigt ist es deshalb vorgesehen, dass das Geschwindigkeits- und/oder Abstandsregelungssystem in einen das Wiedereinscheren erleichternden Betriebszustand wechselt.

In diesem Betriebszustand kann z.B. in einer einfachen Ausführungsform die Beschleunigung des Motorrads auf einen geringen Wert, z.B. 0.5 m/s², begrenzt werden, so dass die dadurch auch geringere Geschwindigkeit das Einscheren erleichtert. Diese Begrenzung erfolgt, solange der Fahrer den Blinkerhebel betätigt. Sobald das Fahrer den Blinkerhebel loslässt, stellt sich wieder das gewohnte übliche Verhalten des Geschwindigkeits- und/oder Abstandsregelungssystems ein. Üblicherweise hat das Motorrad dann den rechten Fahrstreifen bereits wieder erreicht und das erste Motorrad wird wieder automatisch wie beabsichtigt als Zielobjekt für das System ausgewählt.

In einer etwas komplexeren Ausführungsform ist es auch denkbar, dass während der Betätigung des Blinkerhebels automatisch das nächste auf der rechten Fahrspur vor dem eigenen Fahrzeug befindliche Fahrzeug als Zielobjekt für das Geschwindigkeits- und/oder Abstandsregelungssystem ausgewählt wird. Dies ist dann normalerweise das erste Motorrad, welches den Überholvorgang bereits abgeschlossen hat. Diese Ausgestaltung hat den Vorteil, dass nach Loslassen des Blinkerhebels bei Erreichen der rechten Fahrspur sich das Fahrverhalten des Motorrads nicht wesentlich ändert, weil dann natürlicherweise das vorausfahrende erste Motorrad als Zielobjekt vom Geschwindigkeits- und/oder Abstandsregelungssystem ausgewählt wird.

In Fig. 1 ist der grundlegende Ablauf des erfindungsgemäßen Verfahrens dargestellt. Nach dem Start des Verfahrens in Block 100 wird anschließend in Block 101 ermittelt, ob eine Betätigung des Bedienelements für den Fahrtrichtungsanzeiger vorliegt. Ist dies der Fall, dann wird in Block 102 das Geschwindigkeits- und/oder Abstandsregelungssystem in einen Wiedereinschermodus geschaltet. Ist dies nicht der Fall, dann wird zu Block 100 zurückgekehrt. Nach Block 102 wird zu Block 101 zurückgekehrt, um zu ermitteln, ob das Bedienelement weiterhin betätigt ist.

## Patentansprüche

1. Verfahren zum Wiedereinscheren auf eine Zielfahrspur nach einem Überholvorgang auf einer mehrspurigen Fahrbahn für ein mit einem automatischen Geschwindigkeits- und/oder Abstandsregelungssystem ausgestattetes einspuriges Kraftfahrzeug bei aktiviertem Geschwindigkeits- und/oder Abstandsregelungssystem, bei dem
- das Vorliegen einer momentanen Betätigung eines Bedienelements für einen Fahrtrichtungsanzeiger ermittelt wird (101) und
- während der Betätigungsdauer des Bedienelements das Geschwindigkeits- und/oder Abstandsregelungssystem in einen das Wiedereinscheren erleichternden Betriebszustand geschaltet wird (102),
**dadurch gekennzeichnet, dass** die Umschaltung in den das Wiedereinscheren erleichternden Betriebszustand nur dann stattfindet, wenn beim Geschwindigkeits- und/oder Abstandsregelungssystem ein aktivier- und deaktivierbarer vorgegebener Betriebsmodus aktiviert ist.

2. Verfahren nach Anspruch 1, **dadurch gekennzeichnet, dass** während dieses Betriebszustands die momentane Beschleunigung beibehalten wird.

3. Verfahren nach Anspruch 1, **dadurch gekennzeichnet, dass** während dieses Betriebszustands mittels einer Umfeldsensorik die Beschleunigung des auf der Zielfahrspur fahrenden Vorderfahrzeugs ermittelt und übernommen wird.

4. Verfahren nach Anspruch 1, **dadurch gekennzeichnet, dass** es sich bei dem Fahrtrichtungsanzeiger um denjenigen Fahrtrichtungsanzeiger handelt, welcher einen Wechsel von einer fahrbahninneren Spur in eine weiter fahrbahnaußen gelegene Spur signalisiert.

5. Verfahren nach Anspruch 1, **dadurch gekennzeichnet, dass** es sich bei dem Bedienelement um den Blinkerhebel handelt.

6. Verfahren nach Anspruch 1, **dadurch gekennzeichnet, dass** es sich bei dem einspurigen Kraftfahrzeug um ein Motorrad handelt.

7. Vorrichtung, enthaltend Mittel, die zur Durchführung eines Verfahrens gemäß einem der Ansprüche 1 - 6 ausgestaltet ist.

## Claims

1. Method for moving back into a target lane after overtaking on a multi-lane roadway for a single-track motor vehicle equipped with an automatic cruise control and/or adaptive cruise control system with the cruise control and/or adaptive cruise control system activated, in which method
- the presence of a current actuation of an operating element for a turn signal is determined (101), and
- during the operating period of the operating element, the cruise control and/or adaptive cruise control system is switched to an operating mode which facilitates moving back (102),
**characterized in that** the switch to the operating state facilitating the moving back only takes place when an activatable and deactivatable predetermined operating mode is activated in the cruise control and/or adaptive cruise control system.

2. Method according to Claim 1, **characterized in that** the current acceleration is maintained during this operating state.

3. Method according to Claim 1, **characterized in that**, during this operating state, the acceleration of the leading vehicle driving in the target lane is determined and adopted by means of an environment sensor system.

4. Method according to Claim 1, **characterized in that** the turn signal is that turn signal which signals a change from a lane on the inside of the roadway to a lane further to the outside of the roadway.

5. Method according to Claim 1, **characterized in that** the operating element is the turn signal lever.

6. Method according to Claim 1, **characterized in that** the single-track motor vehicle is a motorcycle.

7. Device, containing means that are configured to carry out a method according to one of Claims 1 - 6.

## Revendications

1. Procédé permettant de revenir sur une voie cible après un processus de dépassement sur une chaussée à plusieurs voies pour un véhicule automobile à voie unique équipé d'un système de régulation de vitesse et/ou de distance lorsque le système de régulation de vitesse et/ou de distance est activé, dans lequel
- la présence d'un actionnement instantané d'un élément de commande pour un feu indicateur de direction est déterminée (101), et
- pendant la durée d'actionnement de l'élément de commande, le système de régulation de vitesse et/ou de distance est commuté (102) sur un état de fonctionnement facilitant le retour sur la voie,
**caractérisé en ce que** la commutation sur l'état de fonctionnement facilitant le retour sur la voie n'a lieu que si un mode de fonctionnement spécifié pouvant être activé et désactivé est activé dans le système de régulation de vitesse et/ou de distance.

2. Procédé selon la revendication 1, **caractérisé en ce que** l'accélération instantanée est maintenue pendant cet état de fonctionnement.

3. Procédé selon la revendication 1, **caractérisé en ce que** pendant cet état de fonctionnement, l'accélération du véhicule qui précède, roulant sur la voie cible, est déterminée et reprise au moyen d'un système de capteurs d'environnement.

4. Procédé selon la revendication 1, **caractérisé en ce que** le feu indicateur de direction est le feu indicateur de direction qui signale un changement d'une voie intérieure sur la chaussée vers une voie située à l'extérieur de la chaussée.

5. Procédé selon la revendication 1, **caractérisé en ce que** l'élément de commande est le levier de clignotant.

6. Procédé selon la revendication 1, **caractérisé en ce que** le véhicule à moteur à une voie est une moto.

7. Dispositif, comportant des moyens qui sont configurés pour exécuter un procédé selon l'une quelconque des revendications 1 à 6.
